# EUROPEAN PATENT SPECIFICATION

(11) **EP 2 223 496 B1**
(45) Date of publication and mention of the grant of the patent: **20.06.2012**
(21) Application number: 07857998.4
(22) Date of filing: 20.12.2007
(51) Int. Cl.: H04L 29/06

(54) **METHOD AND ARRANGEMENT FOR NETWORK ROAMING OF CORPORATE EXTENSION IDENTITIES**
VERFAHREN UND ANORDNUNG ZUM NETZ-ROAMING VON FIRMENDURCHWAHLIDENTITÄTEN
PROCÉDÉ ET AMÉNAGEMENT POUR UNE ITINÉRANCE EN RÉSEAU D'IDENTITÉS À EXTENSION D'ENTREPRISE

(43) Date of publication of application: 01.09.2010
(73) Proprietor: Telefonaktiebolaget LM Ericsson (publ), 164 83 Stockholm (SE)
(72) Inventor: ISAKSSON, Leif, S-135 42 Tyresö (SE); ROXNÄS, Kjell, S-468 33 Vargön (SE); ÅKERMAN, Jan, S-150 21 Mölnbo (SE)
(74) Representative: Egrelius, Fredrik
(86) International application number: PCT/EP2007/064379
(87) International publication number: WO 2009/080107

(56) References cited:
- WO-A-00/39965
- US-A1- 2003 032 428
- US-B1- 6 775 255

## Description

### TECHNICAL FIELD

The present invention relates to network roaming. More particularly, the present invention relates to a method for roaming in an IP-based corporate network, a node in a local corporate network within an IP-based corporate network, a method in a node, comprising a gate keeper, in a local corporate network of an IP based corporate network, and a terminal for logging on to a local corporate network.

### BACKGROUND

In today's global enterprise world many corporations are widely spread over the world and have local corporate offices in many locations. Some of these corporations have a corporate communication network to ensure communications within the corporation. These corporate communication networks can be IP based and voice communication between terminals within the corporate network is then voice over IP (VoIP). The corporate network may consist of at least one local area network. Many separate local area networks, e.g. one for each local corporate office, can also be interconnected by an IP backbone network. The employees in the corporation can be provided with a unique extension for logging into the corporate network.

Employees within the corporation will often be travelling for various activities to different local corporate offices. During these visits to local corporate offices the employees among others need to communicate with their home corporate office and make external phone calls. For these purposes they can use the terminals within the corporate network at a visited local office. There is also a need for employees to be able to answer calls placed to their extensions at their home office when visiting another local office than their home office. One way to achieve this is to forward their extensions to a specific terminal in a visited local corporate office, where the employee presently is located. However if the employee visits another local corporate office the employees extension has to be forwarded to another terminal in said visited local corporate office. There would therefore be an advantage if employees could receive calls to their extensions on any terminal in the corporate network without the need to forward their extension to a specific terminal in advance from their home office.
Forwarding of an employee's extension will not be a flexible solution when an employee is visiting many different local corporate offices, as forwarding has to be handled and managed from the home office terminal and public branch exchange PBX, to an extension that has to be known when the employee leaves his/her home office.

Further, in an IP based network the extension identities are personal and therefore, a visiting employee may have to borrow another employee's extension for a while. Therefore, it would be favorable if an employee could use the extension identity wherever he or she works within the corporation.

In order for the employees to be able to answer calls to their phone number on any terminal in the corporate network the employee's home office has to know at which terminal in the corporate network the employee presently is located. The corporate network also has to authenticate that it is not an unauthorised person that is trying to get access to the corporate network using an employee's phone number.

Patent application WO/00/39965 describes a method in which a gatekeeper of a visitor in a H. 323 network sends a location update to a gatekeeper of the H. 323 home network.

### SUMMARY

The object of the present invention is to provide an automatic network roaming and log-on procedure for a user, e.g. a subscriber and/or employee, via an IP terminal, e.g. IP phone, to log on from any IP-based sub-network, such as a local corporate network, of a IP-based main network, e.g. a corporate network, to a home sub- network of the user, subscriber and/or employee.

The problem to be solved is how to identify a correct IP address of the home sub-network to which a unique extension identity of the user is belonging.

The problem is solved by configuring a node in the sub-networks, a node comprising the gate keeper of the sub-network, to perform a network roaming method according to the present invention.

One aspect of the present invention is a method according to claim 1 for roaming in an IP based main network wherein users have unique extension identities and unique logon passwords in said main network. A node, comprising a gate keeper, in a sub-network of said main network receives a registration request from a user terminal belonging to said sub-network, wherein the registration request comprises an unique extension identity. The node is configured to determine whether said unique extension identity belongs to the sub-network of the requesting user terminal. In case said extension identity belongs to another sub-network than the node's sub-network, the node will request a routing server of the sub-network for an IP-address of a home sub-network for said unique extension identity. The routing server is configured to respond the IP address of the requested home gate keeper. The node will transmit the IP address to the requesting user terminal for enabling the transmission of a registration request using the IP address to the home sub-network of said unique extension identity from said user terminal.

Further one aspect of the present invention is a node according to claim 7 in a sub-network within an IP-based main network for network roaming in said main network wherein users have unique extension identities and unique logon passwords in said main network. A node, comprising a gate keeper, in a sub-network of said main network is configured to receive a registration request from a user terminal belonging to said sub-network, wherein the registration request comprises an unique extension identity. The node is configured to determine whether said unique extension identity belongs to the sub-network of the requesting user terminal. In case said extension identity belongs to another sub-network than the node's sub-network, the node is configured to request a routing server of the sub-network for an IP-address of a home sub-network for said unique extension identity. The routing server is configured to respond the IP address of the requested home gate keeper. The node is further configured to transmit the IP address to the requesting user terminal for enabling the transmission of a registration request using the IP address to the home sub-network of said unique extension identity from said user terminal.
claim 15 claims a corresponding terminal.

Different other embodiments of the present invention is described in the detailed description and the dependent claims enclosed in the text and drawings hereafter.

One advantage of the present invention is that a user does not need to know or remember the IP address of the sub-network, or the IP addresses of all sub-networks of the main-network, in which the user usually uses when making IP phone-calls. The IP address may also be changed without the users of the sub-network or main network have to be informed and updated. The IP addresses of new sub-networks or new IP addresses of old sub-networks will be easily updated by the owner or operator of the main network in certain records, e.g. routing servers, in the sub-networks and main network.

Further advantages and features of embodiments of the present invention will become apparent when reading the following detailed description in conjunction with the drawings.

### BRIEF DESCRIPTION OF THE DRAWINGS

Figure 1 is a simplified block diagram of an IP based corporate network according to an exemplary embodiment of the present invention.
Figure 2 is a schematic block scheme illustrating a first local corporation network and a second local corporation network according to an embodiment of the present invention.
Figure 3 is a flowchart that illustrates a method for network roaming in a corporate network according to the present invention.
Figure 4 illustrates an exemplary block diagram of a node in a local corporate network for network roaming in an IP based corporate network according to an embodiment of the present invention.
Figure 5 is a flowchart illustrating an embodiment of a method in a local corporate network for network roaming in a corporate network according to the present invention.
Figure 6 illustrates an exemplary block diagram of a terminal e.g. an IP phone, a PC (personal computer), etc, according to an embodiment of the present invention.

### DETAILED DESCRIPTION

The present invention will now be described in more details hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, the same reference signs refer to the same or equivalent elements.

The present invention relates to a network, here called a main network, comprising a number of sub-networks, each sub-network being a part of the main network or in other way closely related to the main network. In the following description, the present invention will be described by means of a corporate network comprising a number of local corporate networks. The corporate network and the sub-networks should be considered as non-limiting example of a main network and its sub-networks.

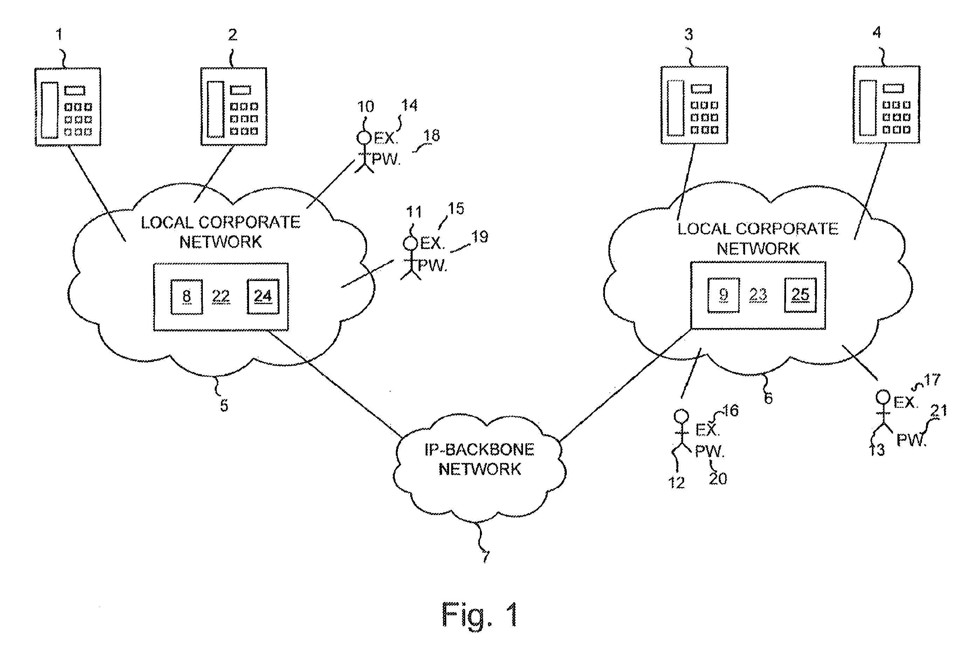

Referring to Figure 1 there is illustrated a simplified block diagram of an IP based corporate network according to an exemplary embodiment of the present invention. As shown in Figure 1 the corporate network 100 consists of two local corporate networks 5, 6 interconnected by an IP-backbone network 7. For instance, the first local corporate network 5 can be a local corporate network in Sweden and the second local corporate network 6 can be a local corporate network in Australia. An IP-based (Internet Protocol based) network 7 interconnects the two local corporate networks 5, 6. Said IP network can be the Internet or an IP backbone network 7 and is used by the corporation for data communication between local corporation offices. One or several user terminals 1, 2, 3, 4, ... have each one communication access to the corporate network 100. The user terminals 1, 2 communicate via the first local corporate network 5, and the user terminals 3, 4 communicate via the second local corporate network 6. As illustrated in figure 1, each local corporate network 5, 6 comprises a Private Branch exchange (PBX) 22, 23, one first PBX 22 serving the first local corporate network 5, and one second PBX 23 serving the second local corporate network 6. Each PBX assists when VoIP calls are made between terminals within a local corporate network, and between terminals in two separate local corporate networks. Another function of an PBX in each local corporate network is to operate as an access node for a local corporate network to an IP network 7. The corporate network 100 has several subscribers 10-13, even called users, which preferably are employees of the corporation. In the exemplary embodiment of the invention according to figure 1, each subscriber/user 10-13 has an unique corporate extension 14-17, which is used for calling a certain user/subscriber. An unique corporate extension is for instance a phone number or network number. In figure 1, the employees 10-13 all have a home office where they can be reached by a phone call during their working day. The home office for some of the employees 10, 11 is the first local corporate network 5 and the home office for other employees 12, 13 is the second local corporate office 6. All the unique corporate extensions for the employees/subscribers/users are grouped, listed and associated to different local corporate networks, i.e. some of the unique corporate extensions, e.g. 14,15, belong to the first corporate network 5 and other unique corporate extensions, e.g. 16, 17, belong to the second local corporate network 6.
A gate keeper is an entity in a corporate network based on the H.323 protocol standard which among others performs address translation between employees' phone numbers in the corporate network and IP addresses. The H.323 standard provides one suit of protocols which can be used to provide communication services in an IP based corporate network. A gatekeeper may also be adapted to perform authentication of the subscribers in the corporate network. In the exemplary embodiment of a corporate network according to figure 1 there are a number of gate keepers of which only two gate keepers 8, 9 are illustrated. The first gate keeper 8 is associated with PBX 22, wherein the gate keeper and the PBX is considered to logically form a node of the first local corporate network 5. The second gate keeper 9 is associated with PBX 23, wherein the gate keeper and the PBX is considered to logically form a node of the second local corporate network 6. In the exemplary embodiment of the invention according to figure 1, it is the gate keeper entities that are configured to keep track of which unique corporate extensions belonging to its local corporate network, where the gate keeper is located. The gate keeper 8 is configured to keep track of a set of unique corporate extensions belonging to the local corporate network 5, and correspondingly for the gate keeper 9 and the set of unique corporate extension belonging to the local corporate network 6.

The local office, e.g. the head office of the corporation, for the employees 10, 11 is considered as their local home office served by their local home corporate network 5. Each employee and subscriber is supposed to belong to certain local home office, or a local first office, and each of the other local corporate offices are considered to be an employees local second office, or local visited office when visiting such local second office.

Each unique corporate extension 14-17 in the corporate network 100 is also associated with a password 18-21 that among others is used to authenticate the employees when they are logging in to the corporate network 100. Each PBX 22, 23 is also associated with routing servers 24, 25 that provides the capability to store IP routing information and alternative routing information for the network in order to route calls to the required destination. When a subscriber is logged on to the system and wants to place a call to another extension in the corporate network it is the routing servers that provides routing information to the extension which the subscriber is trying to reach.

When a user, or subscriber/employee, wants to use a terminal, e.g. IP phone, for making phone calls, the terminal has to be logged on to the gate keeper of the local corporate network. The terminal may be provided with a logon/logoff key for actuating an automatic logon process, which now will be described. When a user pushes the logon key, the terminal is set to send a request to a DHCP (Dynamic Host Configuration Protocol) server for an IP address and other stored information relevant for the terminal. DHCP is a protocol used by networked devices (clients) to obtain various parameters necessary for the clients to operate in an Internet Protocol (IP)network. By using this protocol, system administration workload greatly decreases, and devices can be added to the network with minimal or no manual configurations. The DHCP server will respond with a temporary terminal IP address for the terminal and an IP address for an Installation Server (IS) to the terminal. The terminal then sends a request for a gate keeper to logon. The Installation Server is configured to identify the terminals IP address and will respond with a first choice (default) gate keeper IP address, predefined in the Installation Server. Further, the IS may automatically forward updating information and/or new software for the terminal. After having received the gate keeper IP address, the terminal will be able to send a Registration Request to the indicated gate keeper, which will reply with a identification inquiry back to the terminal. Said identification inquiry will be presented on the terminal display. The user, in this case, an employee of the local office will key in the employee's phone number, which is considered as a unique corporation extension identity. The gate keeper is configured to check if the phone number is known for the gate keeper and, may optionally perform an authentication procedure. When the phone number is accepted, the terminal is logged-on to the gate keeper for further use.

It should be noted that there are several different ways of realizing a corporate network and that Fig. 1 and the description above merely constitutes one example. Further embodiments of the present invention will now be described in more details based on the corporate network in figure 1.

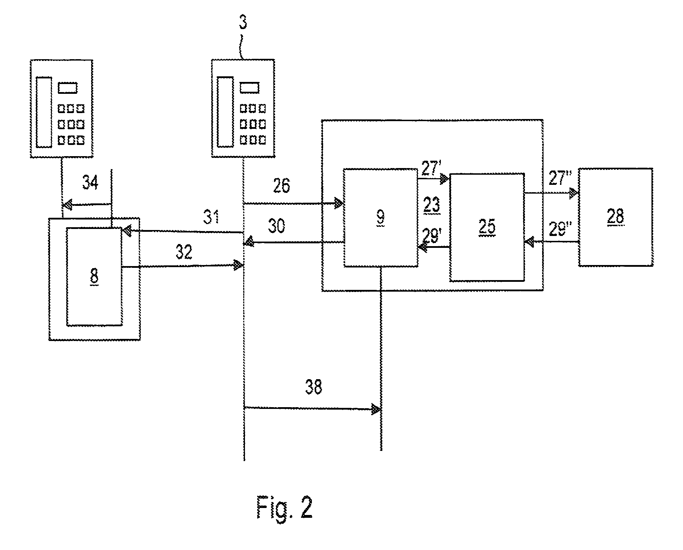

Figure 2 is a schematic block scheme illustrating a first local corporation network 5 and a second local corporation network 6 visited by an corporation employee 10 (see figure 1), whose local home corporation network is the first network 5. Both the local home corporate network 5 and the local visited corporate network 6 are parts of a corporate network 100. The local home corporate network 5 involves a PBX 22 that comprises a gate keeper 8. Terminals of the local home corporate office, like phone terminal 1, is adapted to be connected to the PBX and the gate keeper by a logon procedure. The local visited corporate network 6 involves a PBX 23 that comprises a gate keeper 9. Terminals of the local visited corporate office, like phone terminal 3, is correspondingly adapted to be connected to the PBX and the gate keeper by an employee/subscriber logging on. Further, the gate keeper 9 is configured to communicate with a routing server 25 via a suitable protocol interface. The routing server 25 is configured to communicate with a corporate routing server 28 via a protocol interface

Referring to Figure 2, message communication are illustrated according to an exemplary embodiment of the present invention for network roaming in an IP based corporate network. It is here assumed that the subscriber 10 which has the home office 5, for instance in Sweden, is visiting another corporate local office 6, in for instance Australia. The subscriber 10 now, according to the invention, wants the possibility to answer calls made to his/her unique corporate extension from a terminal 3 in the local corporate office 6 in Australia. The subscriber 10 first has to log on to the local visited corporate network 6 from the terminal 3. In order to log on to the corporate network from the terminal 3 the subscriber inputs his/her unique corporate extension 14 (see figure 1) on the terminal 3. The terminals then transmits a registration request 26 comprising the unique corporate extension 14 inputted by the subscriber 10 to the gate keeper 9 in the local corporation network 6. After reception of the registration request 26, the gate keeper 9 determines if the unique corporate extension identity belongs to the local corporate network 6. In the exemplary embodiment of the invention according to figure 2, the gate keeper 9 is configured to compare the unique corporate extension identities to a stored/listed set of identities and to determine whether the unique corporate extension 14 belongs to another local corporate network within the corporate network of the corporation. In case authentication is enabled, the gate keeper is configured to request authorization to access the local corporate network 6, an employee has to input his/her password to be able to logon to the network. In this exemplary embodiment of the invention authentication is enabled. But since the gate keeper 9 determines, as a result of the comparison, that the unique corporate extension 14 belongs to another network within the corporate network, the password request for the extension is disabled and the subscriber does not at this stage have to input the password 18 associated with the unique corporate extension 14. Since the unique corporate extension 14 belongs to another network the subscriber 10 is not able to log on to the corporate network and the gate keeper 9 therefore has to find the home network for the unique corporate extension 14. The gate keeper 9 sends a request 27' to a routing server 25 for an IP address of a home gate keeper (HGK) 8 associated with said unique corporate extension identity 14 for the visiting subscriber/employee. The IP address of the home gate keeper 8 is responded to the gate keeper 9 in a respond message 29'.

In case no IP address for the home gate keeper (HGK) associated with the unique corporate extension 14 is found in the routing server 25, a request 27" for an IP address for a home gate keeper associated with the unique corporate extension 14 is sent from the routing server 25 to a corporate routing server 28. In case the IP address for the home gate keeper 8 associated with the unique corporate extension 14 can not be found in the corporate routing server 28, a message 29" is transmitted from the corporate routing server 28 to the local routing server 25 indicating that the IP address for the home gate keeper 8 associated with the unique corporate extension 14 can not be found. The local routing server generates and transmits a negative response message 29' to the gate keeper 9, which generates and transmits a message 30 indicating to the terminal 3 that the registration request 26 is rejected.

If the IP address for the home gate keeper 8 is found in the corporate routing server 28, the message 29" transmitted to the local routing server 25 contains the IP address. The local routing server 25 generates and transmits a positive response message 29' to the gate keeper 9, which generates and transmits a message 30 containing the requested IP address to the terminal 3.

In case the gate keeper 9 has responded the IP address in the message 30 to the terminal 3, the terminal transmits a registration request 31 to the home gate keeper 8 using the IP address. In case the unique corporate extension 14 is already registered in the home gate keeper 8 the registration/log on state of the unique corporate extension is checked. If there are active calls on the unique corporate extension 14 the active calls are disconnected and a un-registration request 34 is sent towards a terminals. The home gate keeper then transmits a password request 32 to the terminal 3. After receiving a password 18 from the terminal 3 the home gate keeper 8 authenticates the login password and logs on the terminal 3 by registering the terminal 3 in the home gate keeper 8.

According to one embodiment of the invention, the home gate keeper 8 is also configured to handle emergency call request from terminals 3 and 4 that are remotely logged in differently compared to emergency call requests from terminals 1 and 2 in the local corporate network 5 associated with the home gate keeper 8. If an emergency call request 35 is received in the gate keeper 8 from the terminal 3 a message 36 is transmitted from the home gate keeper 8 to the terminal 3 ordering the terminal 3 to place the emergency call request 37 to a gate keeper 9 in the local corporate network 6 where the terminal 3 is located. If an emergency call requests is received from that is remotely logged in the home gate keeper 8 will also reject all incoming calls to the unique corporate extension 14. Another method for handling emergency calls from terminals 3 and 4 when they are remotely logged is to transmit a message 38 to the terminal 3 informing the terminal 3 that it is remotely logged in and that the terminal 3 should place emergency call requests 37 to the gate keeper 9 in the local corporate network 6.

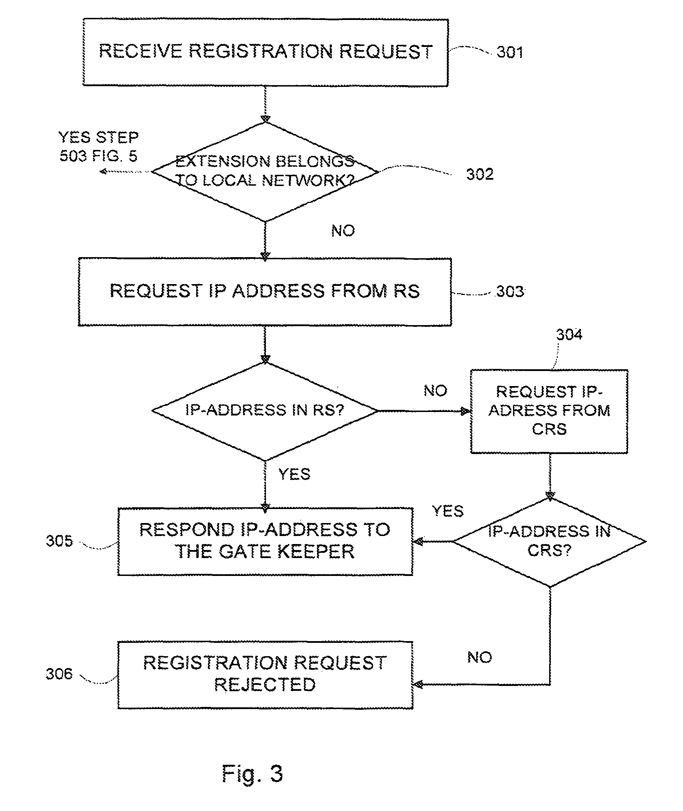

Figure 3 is a flowchart that illustrates a method for network roaming in a corporate network according to the present invention. In step 301 a registration request comprising a unique corporate extension is received in a gate keeper in a local corporate network. The unique corporate extension can for instance be a phone number or a network number. The local corporate network could for instance be a local corporate network in Australia. The registration request is received from a terminal that belongs to the local corporate network. In the next step 302, the node determines whether the unique corporate extension identity is registered to the local corporate network or to another local corporate network. A unique corporate extension identity belonging to the local corporate network may identify a person having an employment at the local corporate office. If the unique corporate extension belongs to another local network different from the employee's home local corporate network, a routing server in the local network is requested, in step 303, for an IP address of a home gate keeper for the unique corporate extension. In case a password is required to log on to the local corporate network a password request for the terminal is also disabled in the gate keeper, in step 303, in case the extension belongs to the another network than the local network.

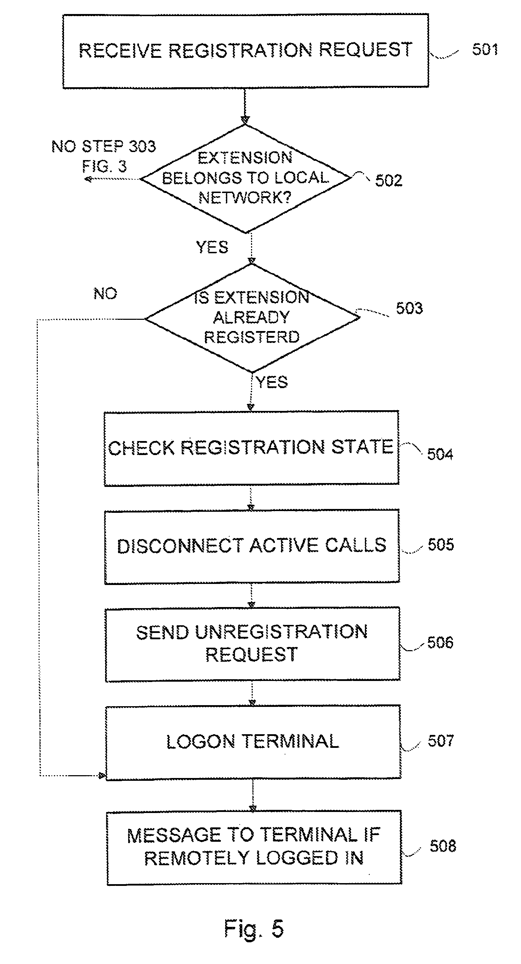

If the IP address is found in the routing server, the IP address for the requested home gate keeper is responded to the gate keeper, in step 305, which transmits the IP address to the terminal to make it possible for the terminal to transmit a registration to the home gate keeper associated with the unique corporate extension using the IP address for the home gate keeper. If the IP address is not found in the routing server the IP address for the requested home gate keeper, a request for the IP-address is transmitted to a corporate routing server, in step 304. If the IP-address is found in the corporate routing server the IP-address is responded to the gate keeper, in step 305, which transmits the IP address to the terminal to make it possible for the terminal to transmit a registration request to the home gate keeper associated with the unique corporate extension using the IP address for the home gate keeper. If no IP address for a home gate keeper associated with the unique corporate extension is found in the corporate routing server, in step 304, a message is received in the routing server, in step 306, indicating that the IP address to the home gate keeper can not be found. A message is then transmitted in step 306 to the terminal indicating that the registration request is rejected. If it is determined in step 302 that the extension belongs to the local network, the method continues with in step 503 in figure 5.

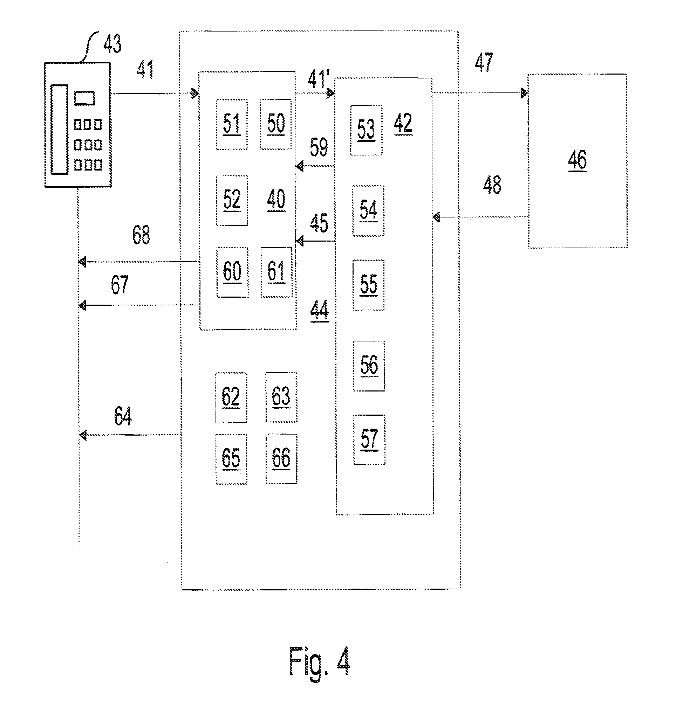

Figure 4 illustrates an exemplary block diagram of a node 44 in a local corporate network for network roaming in an IP based corporate network according to an embodiment of the present invention. The node could for instance be a public branch exchange PBX. The gate keeper 40 has means 50 for receiving a registration request 41 comprising a unique corporate extension from a terminal 43 within the corporate network. The gate keeper is also configured to determine using means 51 whether the unique corporate extension belongs to the local corporate network or to another local network within the corporate network different from the local corporate network. In case the unique corporate extension belongs to another local corporate network different from the local corporate network the gate keeper 40 has means 52 to request, in a message 41' from a routing server 42 in the node an IP address of a home gate keeper associated with unique corporate extension. If the IP address is found in the routing server 42, the routing server 42 has means 53 to transmit the IP address in a message 59 to the gate keeper 40 which transmits the IP address to the terminal 43 in a message 67. If the IP address to the home gate keeper associated with the unique corporate extension can not be found in the routing server 42 the routing server 42 has means 54 to request in a message 47 the IP address associated with the unique corporate extension from a corporate routing server 46. If the IP address associated with the unique corporate extension is found in the corporate routing server 46 the routing server 42 has means 57 to receive from the routing server the IP address, in a message 48, for the home gate keeper associated with the unique corporate extension. The routing server 42 then transmits the IP address using means 53 in a message 59 to the gate keeper 40 which transmits the IP address to the terminal 43 in a message 67. If the IP address associated with the unique corporate extension can not be found in the corporate routing server 46 the routing server 42 has means 55 to receive from the corporate routing server the message 48 indicating that the IP address to the home gate keeper associated with the unique corporate extension can not be found. The routing server 42 then transmits a message 45 using means 56 to the gate keeper which indicates that the IP address for the home gate keeper associated with the unique corporate extension can not be found. The gate keeper in response to the message 45 transmits a message 68 which indicates that the registration request is rejected. In case a password is required to log on to the local corporate network the gate keeper 40 also has means 60 to disable a password request for the terminal 43 in case the extension belongs to another network different from the local network.

If the gate keeper 40 determines using means 51 that the unique corporate extension belongs to the local corporate network the gate keeper 40 determines using means 61 whether the unique corporate extension is already registered in the node. In case the unique corporate extension is already registered in the node it has means 62 for checking the registration/log on state of the unique corporate extension. If there are active calls on the unique corporate extension the node is also configured for disconnecting the active calls using means 65 and sending an un-registration request using means 63 towards a terminal registered with the unique corporate extension for logging of the terminal using the unique corporate extension. The gate keeper then process the registration request 41 and logs on the terminal 43 by registering the terminal in the gate keeper 40. If the terminal 43 is a terminal that belongs to another network different from the local corporate network which is determined by means 66 in the node, the node sends a message 64 to the terminal 43 informing the terminal that it is remotely logged in and that the terminal should place emergency call requests to a node in the another local corporate network where the terminal is located.

Figure 5 is a flowchart that illustrates an embodiment of a method in a local corporate network for network roaming in a corporate network according to the present invention. In step 501 a registration request comprising a unique corporate extension is received in a gate keeper in a local corporate network. The unique corporate extension can for instance be a phone number or a network number. The local corporate network could for instance be a local corporate network in Australia. In the next step 502 the node determines whether the unique corporate extension belongs to the local network or to another network. If the unique corporate extension belongs to the local corporate network the node checks in step 503 if the unique corporate extension is already registered in the node. If the unique corporate extension is not registered in the node the method continues in step 507. If the unique corporate extension is already registered in the node the registration/log on state of the unique corporate extension is checked in step 504 to determine if there are any active calls on the extension. Any active calls are disconnected in step 505 in case there are any active calls. A terminal already registered is un-registered, in step 506, by sending an un-registration request towards the terminal that is registered with the unique corporate extension for logging of the terminal. The terminal that sent the registration request that was received in step 501 is then logged on in step 507 by registering the terminal in the home gate keeper. After the terminal has been logged on the node determines, in step 508, if the terminal belongs to the local network of if the registration request received in step 501 was transmitted from a terminal that belongs to another local network within the corporate network. If the terminal belongs to another network a message is transmitted from the node, in step 508, informing the terminal that it is remotely logged on and that the terminal should place emergency call requests to a node in the another local corporate network where the terminal is located. If it is determined in step 502 that the extension does not belong to the local network the method continues in step 303 in figure 3.

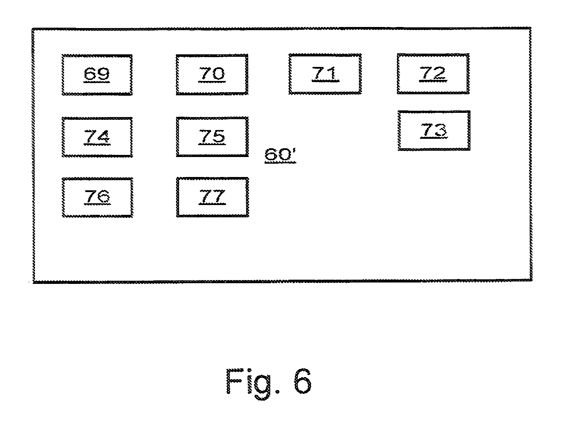

Figure 6 illustrates an exemplary block diagram of a terminal 60, e.g. an IP phone, a PC (personal computer), etc, in a local corporate network used for network roaming in an IP based corporate network according to en embodiment of the present invention.

The terminal has a controller 74, with storage means for storing computer software and data to the controller operation and functions, which controls the terminal and its regular functions beside the means for implementing the present invention. An input unit 75 comprises input interface circuits, e.g. for handling the input signals and digital information generate by a microphone and/or push buttons. The terminal also has output means 76 comprising output interface circuits, e.g. for handling the output signals and digital information generated by the terminals different blocks and circuits for presentation by a loudspeaker and/or a display. An interface 77 connects the terminal to the local corporate network. The interface could be a wire connection or a wireless connection. The terminal has means 69 for transmitting a registration request to a gate keeper in the local corporate network comprising a unique corporate extension belonging to another local corporate network. Since the unique corporate extension is associated with another gate keeper the terminal is not able to register in the gate keeper to which the registration request was sent. The terminal is therefore configured for receiving an IP address using means 70 to the home gate keeper associated with said unique corporate extension which was transmitted from the terminal in the registration request. After the IP address is received the terminal 60 is able to transmitting the registration request to the home gate keeper associated with the unique corporate extension using the IP address received from the gate keeper. If the IP address to the home gate keeper associated with unique corporate extension can not be found the terminal is configured to be able to receive a message using means 71 that indicates that said registration request is rejected since the IP address to the home gate keeper can not be found. The terminal 60 has also means 72 and 73 for handling emergency calls according to the present invention. When the terminal is remotely logged in the terminal is configured to receive a message from the home gate keeper using means 72 informing the terminal that it is remotely logged in and that the terminal should place emergency call requests to a node in the local corporate network. To be able to handle emergency calls differently from other telephone numbers the terminal has means 73 for analyzing a dialed number and determine if the number is an emergency number. In case the dialed number is an emergency number the terminal places the emergency call request to a node in the local corporate network.

While the invention has been described in terms of several preferred embodiments, it is contemplated that alternatives, modifications, permutations and equivalents thereof will become apparent to those skilled in the art upon reading of the specifications and study of the drawings. It is therefore intended that the following appended claims include such alternatives, modifications, permutations and equivalents as fall within the scope of the present invention

## Claims

1. A method for roaming in an IP based main network wherein subscribers have unique extension identities and unique logon passwords in said main network, said method comprises the steps of:
- receiving a registration request in a gate keeper (8,9) in a sub-network within said main network from a terminal (1, 2, 3, 4) belonging to said sub-network, said registration request comprising an unique extension identity;
- determining within said gate keeper whether said unique extension identity belongs to said sub-network, **characterized in that** said method further comprises: in case said extension identity belongs to another network than said sub-network,
- requesting a routing server (24, 25) of said sub-network, an IP address of a home gate keeper for said unique extension;
- responding the IP address of the requested home gate keeper from the routing server to the gate keeper; and
- transmitting the IP address from the gate keeper to the terminal for enabling the transmission of a registration request using said IP address to the home gatekeeper of said unique extension from said terminal.

2. The method according to claim 1, further comprising the steps of in case no IP address is found by said routing server;
- sending a request from the routing server for an IP address of the home gate keeper to a main routing server (28);
- receiving from said main routing server in the routing server the IP address of the home gate keeper.

3. The method according to claim 2, further comprising the steps of, if no correct IP address is identified by said main routing server (28):
- receiving in the routing server from the main routing server a message indicating that said corporate extension identity can not be found; and
- transmitting a message from the routing server to the terminal indicating that said registration request is rejected.

4. The method according to any of claims 1-3, further comprising the steps of:
- disabling in said gatekeeper (8, 9) a password request for said unique extension identity in case said extension belongs to another network than said sub-network of the gate keeper.

5. The method according to any of claims 1-4, wherein said unique extension identity is a phone number or a network number.

6. The method according to any of claims 1-5, wherein the main network is a corporate network, a sub-network is a local corporate network, a main routing server is a corporate routing server, and the unique extension identity is a unique corporate extension identity.

7. A node for a sub-network within an IP-based main network wherein subscribers have unique extension identities and unique logon passwords in said main network, wherein the node comprises: a routing server (24, 25);
- a gate keeper (8, 9) for receiving a registration request comprising a unique extension identity from a terminal (1, 2, 3, 4);
- the gate keeper is configured to determine whether the unique extension identity belongs to the sub-network **characterised in that**:
- the gate keeper is configured to request the routing server (24, 25) for an IP address of a home gate keeper associated with the unique extension identity in case the unique extension identity belongs to another network than the sub-network of the gate keeper,
- the routing server is configured to respond the IP address of the requested home gate keeper from the routing server to the gate keeper; and
- the gate keeper is configured for transmitting the IP address to the terminal for enabling the transmission of a registration request using said IP address to the home gatekeeper of the unique extension identity from the terminal.

8. The node according to claim 7, wherein the routing server further is configured to:
- request for an IP address of the home gate keeper (28) associated with the unique extension identity from a main routing server (28) in case no IP address is found in the routing server; and
- receive the IP address from the main routing server.

9. The node according to claim 8, where said routing server (24, 25) further is configured to:
- receive from the main routing server a message indicating that said IP address can not be found; and
- send a message to the terminal indicating that the registration request is rejected.

10. The node according to any of claims 7-9, where said gate keeper (8, 9) further is configured to:
- disable a password request for a terminal in case the extension identity belongs to another sub-network than the sub-network of the gate keeper.

11. The node according to any of claims 7-10, where the node is public branch exchange (22, 23).

12. The node according to any of claims 7, 8 and 10, where the node further is configured to:
- determine, in case the unique extension identity belongs to the sub-network, whether the unique extension is already registered in the node;
- check registration/log on state of the unique the extension identity in case the unique the extension identity is already registered in the node;
- disconnect active calls in case there are calls active on the unique extension;
- send an un-registration request towards a terminal registered with the unique extension identity for logging of said first terminal; and
- process said registrations request and log on the terminal by registering the terminal in the gatekeeper.

13. The node according to claim 12, where the node further is configured to:
- determine whether the terminal belongs to the sub-network;
- transmit from the node a message to the terminal, in case said terminal belongs to another sub-network, informing the terminal that it is remotely logged on and that the terminal should place emergency call requests to a node in the other sub-network where the terminal is located and usually registered.

14. The node according to any of claims 7-13, wherein the main network is a corporate network, a sub-network is a local corporate network, a main routing server is a corporate routing server, and the unique extension identity is a unique corporate extension identity.

15. A terminal (1, 2, 3, 4) for logging on to a sub-network within an IP based main network
wherein subscribers have unique extension identities and unique logon passwords in the main network, wherein the terminal is configured to:
- transmit a registration request to a gate keeper (8, 9) in the sub-network comprising a unique extension identity belonging to another sub-network, **characterised in that** the terminal further is configured to:
- receive from the gate keeper an IP address of a home gate keeper associated with the unique extension identity; and
- transmit the registration request to the home gate keeper using the IP address.

16. The terminal according to claim 15, wherein the terminal further is configured to:
- receive a message indicating that said registration request is rejected since the unique extension identity has no registered gate keeper IP address and thereby stop the logon procedure.

17. The terminal according to claim 16, wherein the terminal further is configured to:
- receive a message informing the terminal that it is remotely logged on and that the terminal should place emergency call requests to a node in the sub-network.

18. The terminal according to claim 15, wherein said terminal further is configured to:
- analyse a dialled number and in case the number is an emergency number place the emergency call request to a node in the sub-network.

19. The terminal according to any of claims 16-18, wherein the main network is a corporate network, a sub-network is a local corporate network, and the unique extension identity is a unique corporate extension identity.

## Patentansprüche

1. Verfahren zum Roaming in einem IP-gestützten Hauptnetzwerk, wobei Teilnehmer eindeutige Durchwahlkennungen und eindeutige Anmeldungspasswörter in dem Hauptnetzwerk haben, wobei das Verfahren die Schritte umfasst:
- in einem Gatekeeper (8, 9) in einem Teilnetzwerk innerhalb des Hauptnetzwerks erfolgendes Empfangen einer Registrierungsanfrage von einem Endgerät (1, 2, 3, 4), das zu dem Teilnetzwerk gehört, wobei die Registrierungsanfrage eine eindeutige Durchwahlkennung umfasst;
- im G a t ekeeper erfolgendes Bestimmen, ob die eindeutige Durchwahlkennung zu dem Teilnetzwerk gehört, **dadurch gekennzeichnet, dass** das Verfahren ferner umfasst, falls die eindeutige Durchwahlkennung zu einem anderen Netzwerk als dem Teilnetzwerk gehört:
- Anfragen eines Routingservers (24, 25) des Teilnetzwerks nach einer IP-Adresse eines Heimat-Gatekeepers für die eindeutige Durchwahl;
- Rückmelden der IP-Adresse des angefragten Heimat-Gatekeepers vom Routingserver zum Gatekeeper; und
- Übertragen der IP-Adresse vom Gatekeeper zum Endgerät, um die Übertragung einer Registrierungsanfrage unter Verwendung der IP-Adresse von dem Endgerät zum Heimat-Gatekeeper der eindeutigen Durchwahl zu ermöglichen.

2. Verfahren nach Anspruch 1, ferner die Schritte umfassend, falls durch den Routingserver keine IP-Adresse gefunden wird:
- Senden einer Anfrage nach einer IP-Adresse des Heimat-Gatekeepers vom Routingserver an einen Haupt-Routingserver (28);
- im Routingserver erfolgendes Empfangen der IP-Adresse des Heimat-Gatekeepers von dem Haupt-Routingserver.

3. Verfahren nach Anspruch 2, ferner die Schritte umfassend, falls durch den Haupt-Routingserver (28) keine korrekte IP-Adresse identifiziert wird:
- im Routingserver erfolgendes Empfangen einer Nachricht von dem Haupt-Routingserver, die angibt, dass die Firmen-Durchwahlkennung nicht gefunden werden kann; und
- Übertragen einer Nachricht vom Routingserver zum Endgerät, die angibt, dass die Registrierungsanfrage abgelehnt wird.

4. Verfahren nach einem der Ansprüche 1 bis 3, ferner den Schritt umfassend:
- in dem Gatekeeper (8, 9) erfolgendes Sperren einer Passwortanfrage für die eindeutige Durchwahlkennung, falls die Durchwahl zu einem anderen Netzwerk als dem Teilnetzwerk des Gatekeepers gehört.

5. Verfahren nach einem der Ansprüche 1 bis 4, wobei die eindeutige Durchwahlkennung eine Telefonnummer oder eine Netzwerknummer ist.

6. Verfahren nach einem der Ansprüche 1 bis 5, wobei das Hauptnetzwerk ein Firmennetzwerk ist, ein Teilnetzwerk ein lokales Firmennetzwerk ist, ein Haupt-Routingserver ein Firmen-Routingserver ist und die eindeutige Durchwahlkennung eine eindeutige Firmen-Durchwahlkennung ist.

7. Knoten für ein Teilnetzwerk innerhalb eines IP-gestützten Hauptnetzwerks, wobei Teilnehmer eindeutige Durchwahlkennungen und eindeutige Anmeldungspasswörter in dem Hauptnetzwerk haben, wobei der Knoten umfasst:
- einen Routingserver (24, 25);
- einen Gatekeeper (8, 9) zum Empfangen einer Registrierungsanfrage, die eine eindeutige Durchwahlkennung umfasst, von einem Endgerät (1, 2, 3, 4),
- wobei der Gatekeeper dafür konfiguriert ist, zu bestimmen, ob die eindeutige Durchwahlkennung zum Teilnetzwerk gehört, **dadurch gekennzeichnet, dass**:
- der Gatekeeper dafür konfiguriert ist, falls die eindeutige Durchwahlkennung zu einem anderen Netzwerk als dem Teilnetzwerk des Gatekeepers gehört, den Routingserver (24, 25) nach einer IP-Adresse eines Heimat-Gatekeepers, welcher der eindeutigen Durchwahlkennung zugeordnet ist, anzufragen;
- der Routingserver dafür konfiguriert ist, die IP-Adresse des angefragten Heimat-Gatekeepers vom Routingserver zum Gatekeeper zurückzumelden; und
- der Gatekeeper dafür konfiguriert ist, die IP-Adresse zum Endgerät zu übertragen, um die Übertragung einer Registrierungsanfrage unter Verwendung der IP-Adresse vom Endgerät zum Heimat-Gatekeeper der eindeutigen Durchwahlkennung zu ermöglichen.

8. Knoten nach Anspruch 7, wobei der Routingserver ferner dafür konfiguriert ist:
- eine IP-Adresse des Heimat-Gatekeepers, welcher der eindeutigen Durchwahlkennung zugeordnet ist, von einem Haupt-Routingserver (28) anzufragen, falls im Routingserver keine IP-Adresse gefunden wird, und
- die IP-Adresse vom Haupt-Routingserver zu empfangen.

9. Knoten nach Anspruch 8, wobei der Routingserver (24, 25) ferner dafür konfiguriert ist:
- vom Haupt-Routingserver eine Nachricht zu empfangen, die angibt, dass die IP-Adresse nicht gefunden werden kann; und
- eine Nachricht an das Endgerät zu senden, die angibt, dass die Registrierungsanfrage abgelehnt wird.

10. Knoten nach einem der Ansprüche 7 bis 9, wobei der Gatekeeper (8, 9) ferner dafür konfiguriert ist:
- eine Passwortanfrage für ein Endgerät zu sperren, falls die Durchwahlkennung zu einem anderen Teilnetzwerk als dem Teilnetzwerk des Gatekeepers gehört.

11. Knoten nach einem der Ansprüche 7 bis 10, wobei der Knoten eine öffentliche Nebenstelle (22, 23) ist.

12. Knoten nach einem der Ansprüche 7, 8 und 10, wobei der Knoten ferner dafür konfiguriert ist:
- zu bestimmen, falls die eindeutige Durchwahlkennung zum Teilnetzwerk gehört, ob die eindeutige Durchwahlkennung bereits im Knoten registriert ist;
- den Registrierungs-/Anmeldungsstatus der eindeutigen Durchwahlkennung zu prüfen, falls die eindeutige Durchwahlkennung bereits im Knoten registriert ist;
- aktive Gesprächsverbindungen zu unterbrechen, falls es aktive Gesprächsverbindungen auf der eindeutigen Durchwahlkennung gibt;
- eine Entregistrierungsanfrage an ein mit der eindeutigen Durchwahlkennung registriertes Endgerät zu senden, um das erste Endgerät anzumelden; und
- die Registrierungsanfrage zu verarbeiten und das Endgerät anzumelden, indem das Endgerät im Gatekeeper registriert wird.

13. Knoten nach Anspruch 12, wobei der Knoten ferner dafür konfiguriert ist:
- zu bestimmen, ob das Endgerät zum Teilnetzwerk gehört;
- falls das Endgerät zu einem anderen Teilnetzwerk gehört, eine Nachricht vom Knoten zum Endgerät zu übertragen, die das Endgerät informiert, dass es von außerhalb angemeldet ist und dass das Endgerät Notrufanfragen an einen Knoten im anderen Teilnetzwerk richten sollte, wo sich das Endgerät befindet und normalerweise registriert ist.

14. Knoten nach einem der Ansprüche 7 bis 13, wobei das Hauptnetzwerk ein Firmennetzwerk ist, ein Teilnetzwerk ein lokales Firmennetzwerk ist, ein Haupt-Routingserver ein Firmen-Routingserver ist und die eindeutige Durchwahlkennung eine eindeutige Firmen-Durchwahlkennung ist.

15. Endgerät (1, 2, 3, 4) zum Anmelden in einem Teilnetzwerk innerhalb eines IP-gestützten Hauptnetzwerks, wobei Teilnehmer eindeutige Durchwahlkennungen und eindeutige Anmeldungspasswörter in dem Hauptnetzwerk haben, wobei das Endgerät dafür konfiguriert ist:
- eine Registrierungsanfrage zu einem Gatekeeper (8, 9) im Teilnetzwerk zu übertragen, die eine eindeutige Durchwahlkennung umfasst, die zu einem anderen Teilnetzwerk gehört, **dadurch gekennzeichnet, dass** das Endgerät ferner dafür konfiguriert ist:
- vom Gatekeeper eine IP-Adresse eines Heimat-Gatekeepers zu empfangen, welcher der eindeutigen Durchwahlkennung zugeordnet ist; und
- die Registrierungsanfrage unter Verwendung der IP-Adresse zum Heimat-Gatekeeper zu übertragen.

16. Endgerät nach Anspruch 15, wobei das Endgerät ferner dafür konfiguriert ist:
- eine Nachricht zu empfangen, die angibt, dass die Registrierungsanfrage abgelehnt wird, da die eindeutige Durchwahlkennung keine registrierte Gatekeeper-IP-Adresse hat, und dadurch die Anmeldeprozedur zu beenden.

17. Endgerät nach Anspruch 16, wobei das Endgerät ferner dafür konfiguriert ist:
- eine Nachricht zu empfangen, die das Endgerät informiert, dass es von außerhalb angemeldet ist und dass das Endgerät Notrufanfragen an einen Knoten im Teilnetzwerk richten sollte.

18. Endgerät nach Anspruch 15, wobei das Endgerät ferner dafür konfiguriert ist:
- eine gewählte Nummer zu analysieren, und falls die gewählte Nummer eine Notfallnummer ist, die Notrufanfrage an einen Knoten im Teilnetzwerk zu richten.

19. Endgerät nach einem der Ansprüche 15 bis 18, wobei das Hauptnetzwerk ein Firmennetzwerk ist, ein Teilnetzwerk ein lokales Firmennetzwerk ist und die eindeutige Durchwahlkennung eine eindeutige Firmen-Durchwahlkennung ist.

## Revendications

1. Procédé d'itinérance dans un réseau principal basé sur IP dans lequel les abonnés présentent des identités d'extension uniques et des mots de passe de connexion uniques dans ledit réseau principal, ledit procédé comprend les étapes ci-dessous consistant à :
- recevoir une demande d'enregistrement, au niveau d'un portier (8, 9) dans un sous-réseau au sein dudit réseau principal, en provenance d'un terminal (1, 2, 3, 4) appartenant audit sous-réseau, ladite demande d'enregistrement comprenant une identité d'extension unique ;
- déterminer, au sein dudit portier, si ladite identité d'extension unique appartient audit sous-réseau, **caractérisé en ce que** ledit procédé comporte en outre les étapes ci-dessous consistant à, au cas où ladite identité d'extension appartient à un réseau distinct dudit sous-réseau :
- demander, à un serveur d'acheminement (24, 25) dudit sous-réseau, une adresse IP d'un portier domestique pour ladite extension unique ;
- envoyer, en réponse, l'adresse IP du portier domestique sollicité, du serveur d'acheminement au portier ; et
- transmettre l'adresse IP du portier au terminal, en vue de permettre la transmission d'une demande d'enregistrement utilisant ladite adresse IP au portier domestique de ladite extension unique à partir dudit terminal.

2. Procédé selon la revendication 1, comprenant en outre les étapes ci-dessous consistant à, au cas où aucune adresse IP n'est trouvée par ledit serveur d'acheminement :
- envoyer une demande à partir du serveur d'acheminement, concernant une adresse IP du portier domestique, à un serveur d'acheminement principal (28) ;
- recevoir, à partir dudit serveur d'acheminement principal, au niveau du serveur d'acheminement, l'adresse IP du portier domestique.

3. Procédé selon la revendication 2, comprenant en outre les étapes ci-dessous consistant à, si aucune adresse IP correcte n'est identifiée par ledit serveur d'acheminement principal (28) :
- recevoir, au niveau du serveur d'acheminement, en provenance du serveur d'acheminement principal, un message indiquant que ladite identité d'extension d'entreprise est introuvable ; et
- transmettre un message, du serveur d'acheminement au terminal, indiquant que ladite demande d'enregistrement est rejetée.

4. Procédé selon l'une quelconque des revendications 1 à 3, comprenant en outre l'étape ci-dessous consistant à :
- désactiver, au niveau dudit portier (8, 9), une demande de mot de passe pour ladite identité d'extension unique lorsque ladite extension appartient à un réseau distinct dudit sous-réseau du portier.

5. Procédé selon l'une quelconque des revendications 1 à 4, dans lequel ladite identité d'extension unique est un numéro de téléphone ou un numéro de réseau.

6. Procédé selon l'une quelconque des revendications 1 à 5, dans lequel le réseau principal est un réseau d'entreprise, un sous-réseau est un réseau d'entreprise local, un serveur d'acheminement principal est un serveur d'acheminement d'entreprise, et l'identité d'extension unique est une identité d'extension d'entreprise unique.

7. Noeud d'un sous-réseau dans un réseau principal basé sur IP dans lequel des abonnés présentent des identités d'extension uniques et des mots de passe de connexion uniques dans ledit réseau principal, dans lequel le noeud comprend :
- un serveur d'acheminement (24, 25) ;
- un portier (8, 9) pour recevoir une demande d'enregistrement comprenant une identité d'extension unique en provenance d'un terminal (1, 2, 3, 4) ;
- le portier étant configuré de manière à déterminer si l'identité d'extension unique appartient au sous-réseau, **caractérisé en ce que** :
- le portier est configuré de manière à demander, au serveur d'acheminement (24, 25), une adresse IP d'un portier domestique associée à l'identité d'extension unique, au cas où l'identité d'extension unique appartient à un réseau distinct du sous-réseau du portier ;
- le serveur d'acheminement est configuré de manière à envoyer, en réponse, l'adresse IP du portier domestique sollicité, du serveur d'acheminement au portier ; et
- le portier est configuré de manière à transmettre l'adresse IP au terminal en vue de permettre la transmission d'une demande d'enregistrement utilisant ladite adresse IP vers le portier domestique de l'identité d'extension unique à partir du terminal.

8. Noeud selon la revendication 7, dans lequel le serveur d'acheminement est en outre configuré de manière à :
- demander une adresse IP du portier domestique associée à l'identité d'extension unique à partir d'un serveur d'acheminement principal (28), au cas où aucune adresse IP n'est trouvée dans le serveur d'acheminement ; et
- recevoir l'adresse IP à partir du serveur d'acheminement principal.

9. Noeud selon la revendication 8, dans lequel ledit serveur d'acheminement (24, 25) est en outre configuré de manière à :
- recevoir, à partir du serveur d'acheminement principal, un message indiquant que ladite adresse IP est introuvable ; et
- envoyer un message au terminal indiquant que la demande d'enregistrement est rejetée.

10. Noeud selon l'une quelconque des revendications 7 à 9, dans lequel ledit portier (8, 9) est en outre configuré de manière à :
- désactiver une demande de mot de passe pour un terminal lorsque l'identité d'extension appartient à un sous-réseau distinct du sous-réseau du portier.

11. Noeud selon l'une quelconque des revendications 7 à 10, dans lequel le noeud est un autocommutateur public (22, 23).

12. Noeud selon l'une quelconque des revendications 7, 8 et 10, dans lequel le noeud est en outre configuré de manière à :
- déterminer, lorsque l'identité d'extension unique appartient au sous-réseau, si l'extension unique est déjà enregistrée dans le noeud ;
- vérifier l'état d'enregistrement / de connexion de l'identité d'extension unique au cas où l'identité d'extension unique est déjà enregistrée dans le noeud ;
- déconnecter les appels actifs en cas où il existe des appels actifs sur l'extension unique ;
- envoyer une demande de résiliation d'enregistrement vers un terminal enregistré avec l'identité d'extension unique en vue de la connexion dudit premier terminal ; et
- traiter ladite demande d'enregistrement et connecter le terminal en enregistrant le terminal au niveau du portier.

13. Noeud selon la revendication 12, dans lequel le noeud est en outre configuré de manière à :
- déterminer si le terminal appartient au sous-réseau ;
- transmettre, à partir du noeud, un message au terminal signalant au terminal qu'il est connecté à distance et que le terminal doit émettre des demandes d'appel d'urgence vers un noeud dans l'autre sous-réseau où le terminal est situé et habituellement enregistré, lorsque ledit terminal appartient à un autre sous-réseau.

14. Noeud selon l'une quelconque des revendications 7 à 13, dans lequel le réseau principal est un réseau d'entreprise, un sous-réseau est un réseau d'entreprise local, un serveur d'acheminement principal est un serveur d'acheminement d'entreprise, et l'identité d'extension unique est une identité d'extension d'entreprise unique.

15. Terminal (1, 2, 3, 4) destiné à être connecté à un sous-réseau dans un réseau principal basé sur IP dans lequel les abonnés présentent des identités d'extension uniques et des mots de passe de connexion uniques dans ledit réseau principal, dans lequel le terminal est configuré de manière à :
- transmettre une demande d'enregistrement à un portier (8, 9) dans le sous-réseau, comprenant une identité d'extension unique appartenant à un autre sous-réseau, **caractérisé en ce que** le terminal est en outre configuré de manière à :
- recevoir, à partir du portier, une adresse IP d'un portier domestique associée à l'identité d'extension unique ; et
- transmettre la demande d'enregistrement au portier domestique en utilisant l'adresse IP.

16. Terminal selon la revendication 15, dans lequel le terminal est en outre configuré de manière à :
- recevoir un message indiquant que ladite demande d'enregistrement est rejetée étant donné que l'identité d'extension unique ne présente pas d'adresse IP de portier enregistrée et mettre ainsi fin à la procédure de connexion.

17. Terminal selon la revendication 16, dans lequel le terminal est en outre configuré de manière à :
- recevoir un message indiquant au terminal qu'il est connecté à distance et que le terminal doit émettre des demandes d'appel d'urgence vers un noeud dans le sous-réseau.

18. Terminal selon la revendication 15, dans lequel ledit terminal est en outre configuré de manière à :
- analyser un numéro composé, et lorsque le numéro correspond à un numéro d'urgence, émettre la demande d'appel d'urgence vers un noeud dans le sous-réseau.

19. Terminal selon l'une quelconque des revendications 15 à 18, dans lequel le réseau principal est un réseau d'entreprise, un sous-réseau est un réseau d'entreprise local, et l'identité d'extension unique est une identité d'extension d'entreprise unique.
